(19) Europäisches Patentamt
European Patent Office
Office européen des brevets

(11) **EP 3 844 433 B1**

(12) **EUROPÄISCHE PATENTSCHRIFT**

(45) Veröffentlichungstag und Bekanntmachung des Hinweises auf die Patenterteilung:
**05.10.2022  Patentblatt 2022/40**

(21) Anmeldenummer: **19758971.6**

(22) Anmeldetag: **26.08.2019**

(51) Internationale Patentklassifikation (IPC):
**F17C 1/06** (2006.01)

(52) Gemeinsame Patentklassifikation (CPC):
**B29C 53/582; B29C 53/602; B29C 53/66; B29C 63/10; B29C 63/24; B29C 70/32; B32B 27/38; F17C 1/06; B29C 53/845;** B29K 2063/00; B29L 2031/7156; F17C 2201/0109; F17C 2201/054; F17C 2201/056; F17C 2203/0604;

(Forts.)

(86) Internationale Anmeldenummer:
**PCT/EP2019/072664**

(87) Internationale Veröffentlichungsnummer:
**WO 2020/043641 (05.03.2020 Gazette 2020/10)**

(54) **VERFAHREN ZUR HERSTELLUNG EINES DRUCKGASBEHÄLTERS**

METHOD FOR PRODUCING A COMPRESSED-GAS CONTAINER

PROCÉDÉ DE FABRICATION D'UN RÉSERVOIR DE GAZ SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2018   DE 102018121012**

(43) Veröffentlichungstag der Anmeldung:
**07.07.2021   Patentblatt 2021/27**

(73) Patentinhaber: **Alzchem Trostberg GmbH**
**83308 Trostberg (DE)**

(72) Erfinder:
• **ZGELA, Dominik**
**83376 Truchtlaching (DE)**
• **DIJKINK, Peter**
**84518 Garching an der Alz (DE)**
• **RITZINGER, Florian**
**84518 Garching (DE)**
• **HARTL, Maximilian**
**83250 Marquartstein (DE)**

(74) Vertreter: **Dey, Michael et al**
**Weickmann & Weickmann**
**Patent- und Rechtsanwälte PartmbB**
**Postfach 860 820**
**81635 München (DE)**

(56) Entgegenhaltungen:
EP-A1- 1 526 152        WO-A1-2010/107119
WO-A1-2018/096905        DE-B4-112006 002 717
JP-A- 2014 113 755        US-B2- 9 822 928

• Ly ET AL: "Araldite Advanced Materials", , 1. Juni 2011 (2011-06-01), XP055641781, Gefunden im Internet: URL:https://www.mouldlife.net/ekmps/shops/mouldlife/resources/Other/araldite-ly-1564 -aradur-2954-eur-e-1-.pdf [gefunden am 2019-11-12]

(52) Gemeinsame Patentklassifikation (CPC): (Forts.)
F17C 2203/0619; F17C 2203/0646;
F17C 2203/066; F17C 2203/0663;
F17C 2203/0675; F17C 2221/012; F17C 2221/032;
F17C 2221/033; F17C 2221/035; F17C 2223/0123;
F17C 2223/0153; F17C 2260/011; F17C 2260/013;
Y02E 60/32

**Beschreibung**

Gegenstand der vorliegenden Erfindung ist ein Verfahren zur Herstellung eines Druckgasbehälters, insbesondere eines Druckgasbehälters zum Transport und zur Lagerung von flüssigen Gasen oder Erdgas und insbesondere zur Herstellung eines Druckgasbehälters des Typ-II oder Typ-III oder Typ-IV.

Druckbehälter für den Transport von flüssigen, komprimierten Gasen, wie beispielsweise komprimiertes Erdgas, werden hinsichtlich ihrer Zulassung als Transportbehälter verschiedenen Klassen zugeteilt bzw. in verschiedene Typen unterteilt. Gemeinsam ist diesen Typen, dass die Druckgasbehälter zylindrisch sind und ein oder zwei mehr oder weniger kuppelförmige Enden aufweisen.

Druckgasbehälter des Typ-I umfassen einen Hohlkörper, der vollständig aus Metall, gewöhnlich Aluminium oder Stahl, gefertigt ist. Dieser Typ I ist preiswert, weist jedoch aufgrund seiner Materialien und Bauart im Vergleich zu Druckgasbehältern anderer Typen ein hohes Gewicht auf. Dies Typ I Druckgasbehälter sind vielfach im Einsatz und werden u.a. für den Seetransport verwendet.

Druckgasbehälter des Typ-II umfassen einen dünnen, zylindrischen Mittelabschnitt aus Metall mit kuppelförmigen Enden, sogenannte Enddome, die ebenfalls aus Metall gefertigt sind. Der zylindrische Mittelabschnitt zwischen den Enddomen ist mit einer Verbundhülle, einem sogenannten Composit, verstärkt. Die Verbundumhüllung besteht im Allgemeinen aus Glas-oder Kohlenstofffilamenten, die mit einer Polymermatrix imprägniert sind. Die Enddome sind nicht verstärkt. Bei Druckbehältern des Typ-II trägt der Metallliner etwa 50% der Spannung, die durch den Innendruck des transportierten Gases erzeugt wird. Die übrige Spannung wird durch das Composit abgefangen.

Druckgasbehälter des Typ-III umfassen einen Hohlkörper, der vollständig aus Metall, üblicherweise Aluminium, gefertigt ist. Dieser Hohlkörper, auch Liner genannt, ist im Unterschied zum Typ-II vollständig, somit auch an den Enddomen mit einem Composit, verstärkt. Die Spannung in den Behältern vom Typ-III wird praktisch vollständig auf die Verbundhülle übertragen. Der Liner selbst trägt nur einen kleinen Teil der Belastung.

Druckgasbehälter vom Typ-III sind im Vergleich zu Druckgasbehältern des Typ-I oder des Typ-II wesentlich leichter, jedoch aufgrund ihrer Bauart wesentlich kostenintensiver in der Anschaffung.

Druckgasbehälter des Typ-IV umfassen wie Druckgasbehälter des Typ-III einen Liner, der vollständig mit einem Verbundmaterial ummantelt ist. Im Unterschied zu Druckgasbehältern des Typ-III besteht der Liner jedoch aus einem thermoplastischen Material, beispielsweise Polyethylen oder Polyamid, das seinerseits sehr gasdicht ist. Bei Druckbehältern des Typ-IV trägt das Verbundmaterial fast vollständig die Spannung, die durch den Innendruck des transportierten Gases erzeugt wird. Druckgasbehälter des Typs-IV sind mit Abstand die leichtesten, jedoch aufgrund ihrer Bauart auch die teuersten der hierin beschriebenen Druckgasbehälter.

Neben den Druckgasbehältern der Typen Typ-I bis -IV, die von den zuständigen Behörden unter diesen Bezeichnungen zugelassen sind, existiert ein weiterer Druckgasbehälter des Typ-V. Dieser Druckgasbehälter umfasst einen neuartigen Gefäßaufbau aus einem Composit-Material, das in Unterschichten verschiedene Zusammensetzungen aufweist.

Druckgasbehälter des Typ-II, Typ-III oder Typ-IV sind vielfach im Einsatz und Gegenstand der Patentliteratur. Beispielhaft wird hier auf die folgenden Dokumente verwiesen: DE 101 56377 A1, DE 10 2015 016 699 A1, EP 2 857 428 A1, WO 2013/ 083 172 A1. Weiterhin werden mit den internationalen Patentanmeldung WO 2013/ 083 152 A1 und WO 2016/ 06639 A1 Verfahren zur Herstellung von Druckgasbehältern des Typ-V beschrieben. WO 2018/096905 A1 beschreibt ein Verfahren zur Herstellung eines Druckbehälters.

Derzeit besteht vermehrt der Wunsch, Druckgasbehälter der Typen Typ-III und Typ-IV mit besonders großen Volumina herzustellen und die Herstellung solcher Druckgasbehälter in einem kontinuierlichen Prozess zu verwirklichen. Diese Anforderungen stellen besondere Anforderungen an die Fertigungstechnik der Druckgasbehälter. Insbesondere wird für das Aufbringen der Composit-Schicht auf den Liner mehr Zeit benötigt. Zudem wird eine größere Schichtdicke des Compositmaterials benötigt, um die von den flüssigen Gasen auf den Behälter erzeugten Drücke abzufangen. Sowohl die erhöhte Fertigungszeit als auch die benötigten Schichtdicken stellen hohe Anforderungen an die zu verwendende Polymermatrix. Zudem besteht damit auch die Notwendigkeit geeignete Herstellverfahren bereitzustellen.

Daher liegt der vorliegenden Erfindung die Aufgabe zugrunde, ein Verfahren zur Herstellung von Druckgasbehältern zur Verfügung zu stellen, das breit anwendbar ist und das zur

Herstellung von Druckgasbehälter verwendet werden kann, die den hohen Anforderungen hinsichtlich mechanischer Sicherheit genügen. Des Weiteren soll ein Verfahren bereitgestellt werden, das zur Herstellung von großen Druckgasbehältern, insbesondere großen Druckgasbehältern der Typen Typ-II, Typ-III und Typ IV geeignet ist.

Erfindungsgemäß werden diese Aufgaben durch ein Verfahren gemäß Anspruch 1 gelöst. Somit ist ein Verfahren zur Herstellung eines Druckgasbehälters, der ein Speichervolumen für ein unter Druck stehendes Gas und eine das Speichervolumen einschließende Hülle aufweist, wobei die Hülle einen mit dem Speichervolumen im Kontakt stehenden Liner und, zumindest bereichsweise, mindestens eine auf den Liner aufgebrachte zweite Schicht umfasst, Gegenstand der vorliegenden Erfindung, das die folgenden Verfahrensschritte umfasst:

a) Bereitstellen

i) eines Liners,
ii) einer härtbaren Epoxidharz-Matrix und
iii) Verstärkungsfasern,

b) Beaufschlagen der Verstärkungsfasern mit der härtbaren Epoxidharz-Matrix, wobei die härtbare Epoxidharz-Matrix eine Temperatur im Bereich von 15 bis 50 °C aufweist,

c) Aufwickeln, Legen oder Aufbringen der Verstärkungsfasern auf den Liner zur Bildung der zweiten Schicht,

d) Härten der zweiten Schicht bei einer Temperatur im Bereich von 70 bis 140 °C;

wobei die härtbare Epoxidharz-Matrix bei einer Temperatur im Bereich von 40 bis 50 °C über einen Zeitraum von mindestens 48 Stunden eine Viskosität im Bereich von 200 bis 1000 mPa∗s aufweist.

Bevorzugt ist ein Verfahren zur Herstellung von Druckgaszylindern, in dem härtbare Epoxidharz-Matrix bei einer Temperatur im Bereich von 40 bis 50 °C über einen Zeitraum von mindestens 48 Stunden eine Viskosität im Bereich von 300 bis 1000 mPa∗s, insbesondere im Bereich von 400 bis 1000 mPa∗s, weiter bevorzugt im Bereich von 300 bis 900 mPa∗s, weiter bevorzugt im Bereich von 400 bis 900 mPa∗s, aufweist.

Der erfindungsgemäße Druckgasbehälter ist insbesondere zur Speicherung für ein unter Druck stehendes Gas vorgesehen. Unter einem Gas versteht man dabei ein Material, welches bei Normalbedingungen, insbesondere bei einer Normaltemperatur von 0°C und einem Normaldruck von 1,0 bar gasförmig ist. Im Druckgasbehälter selbst kann das Gas auch flüssig vorliegen, beispielsweise auf Grund eines hohen Drucks oder einer niedrigen Temperatur.

Bei dem Gas handelt es sich insbesondere um Wasserstoff, Erdgas oder ein Flüssiggas, insbesondere um Propan, Propen, Butan, Buten, Isobutan oder Isobuten oder Mischungen davon. Besonders bevorzugt handelt es sich bei dem Gas um Wasserstoff oder Erdgas.

Das Speichervolumen der erfindungsgemäß hergestellten Druckgasbehälter beträgt insbesondere von 30 bis 9000 l, bevorzugt von 30 bis 900 l und mehr bevorzugt von 30 bis 400 l.

Die Schichtdicke der ausgehärteten zweiten Schicht beträgt vorzugsweise von 8 bis 100 mm, insbesondere von 8 bis 80 mm und insbesondere 8 bis 70 mm.

Insbesondere ist ein Verfahren zur kontinuierlichen Herstellung von Druckgaszylindern Gegenstand der vorliegenden Erfindung, die jeweils ein Speichervolumen für ein unter Druck stehendes Gas und eine das Speichervolumen einschließende Hülle aufweisen, wobei die Hülle einen mit dem Speichervolumen im Kontakt stehenden Liner und, zumindest bereichsweise, mindestens eine auf den Liner aufgebrachte zweite Schicht umfasst, wobei das Verfahren die oben genannten Verfahrensschritte a) bis d) umfasst und wobei die härtbare Epoxidharz-Matrix bei einer Temperatur im Bereich von 40 bis 50 °C über einen Zeitraum von mindestens 48 Stunden eine Viskosität im Bereich von 200 bis 1000 mPa∗s aufweist.

Dabei ist ein kontinuierliches Verfahren bevorzugt, dass neben den Verfahrensschritten a) bis d) einen zusätzlicher Verfahrensschritt umfasst. In diesem zusätzlichen Verfahrensschritt erfolgt bevorzugt ein Nachfüllen, insbesondere ein kontinuierliches Nachfüllen, der härtbaren Epoxidharz-Matrix in einer Menge, die derjenigen Menge entspricht, die während des Beaufschlagens der Verstärkungsfasern entnommen wurde.

Im Sinne der vorliegenden Erfindung beinhaltet der Term "härtbare Epoxidharze" insbesondere, dass als Epoxidharze solche Epoxidharze verwendet werden, die wärmehärtbar, d.h. auf Grund ihrer funktionellen Gruppen, nämlich Epoxidgruppen, polymerisierbar, vernetzbar und/oder quervernetzbar und insbesondere durch Wärme polymerisierbar, vernetzbar und/oder quervernetzbar sind. Hierbei erfolgt eine Polymerisation, Vernetzung und/oder Quervernetzung als Folge einer Polyaddition, die durch den Härter induziert wird.

Erfindungsgemäß umfasst die härtbare Epoxidharz-Matrix wenigstens ein Epoxidharz. Vorzugsweise ist das Epoxidharz ein Polyether mit mindestens einem, vorzugsweise mindestens zwei Epoxidgruppen. In einer noch weiter bevorzugten Ausführungsform umfasst die härtbare Epoxidharz-Matrix ein härtbares Epoxidharz und zusätzlich einen Härter. Bevorzugt werden Bisphenol-basierte Epoxidharze, insbesondere Bisphenol-A-diglycidylether oder Bisphenol-F-diglycidylether, Novolak-Epoxidharze, insbesondere Epoxyphenol-Novolak oder aliphatische Epoxidharze eingesetzt. Als Härter wird insbesondere ein Cyanamidhaltiger Härter eingesetzt.

Besonders gute Ergebnisse werden erfindungsgemäß erhalten durch die Verwendung von Bisphenol-A-diglycidylether oder Bisphenol-F-diglycidylether als Epoxidharz und/oder durch die Verwendung von Cyanamid als Härter.

Die Epoxyäquivalentmasse eines Epoxidharzes oder einer Epoxid-Komponente (EEW, Epoxy Equivalent Weight - nachfolgend auch Äquivalentmasse) gemäß der vorliegenden Erfindung wird als Materialeigenschaft des jeweiligen Epoxidharzes bestimmt und gibt die Menge an Epoxidharz in [g] an, die ein Äquivalent [val] Epoxidfunktionen besitzt. Sie errechnet sich aus der Molmasse in [g/mol] dividiert durch die Funktionalität f in [Val/Mol]. Der EEW wird als Mittelwert Ø in [g/eq] oder in [g/Val] angegeben:

$$\text{Ø EEW [g/Val]} = M \text{ [g/mol]} / f \text{ [Val/Mol]}$$

Bei Einsatz verschiedener reaktiver Komponenten zur Formulierung des Harzes errechnet sich die Äquivalentmasse einer Mischung aus i Epoxid-Komponenten bzw. des Tränkharzes umfassend i Epoxid-Komponenten (Ø $EEW_{Mischung}$ [g/Val]) folgendermaßen:

$$\text{Ø EEW}_{Mischung} \text{ [g/Val]} = m_{ges} / (\Sigma\, m_i / \text{Ø EEW}_i)$$

$m_{ges} = \Sigma\, m_i$ mit
$m_i$ = Massen der einzelnen Komponenten der Mischung
Ø $EEW_i$ = Ø Epoxyäquivalentmasse der Komponente i.

Die Viskosität beschreibt die Zähigkeit von Flüssigkeiten und wird mit Hilfe eines Anton Paar MCR 302 mit CTD 450 Viskosimeters gemessen. Hierbei wird die härtbare Epoxidharz-Matrix einer isothermen Viskositätsmessung unterzogen, wobei die Temperatur der härtbaren Epoxidharz-Matrix im Imprägnierbad als Messtemperatur gewählt wird, somit im Bereich zwischen 40°C und 50°C. Die entsprechenden Messplatten des Rheometers werden auf die bestimmte Messtemperatur aufgeheizt und bei Erreichen der Temperatur die härtbare Epoxidharz-Matrix Probe aufgetragen. Bei einem Messspalt von 0,052 mm und einer rotatorischen Scherrate von 5 1/s wird die Viskosität der härtbaren Epoxidharz-Matrix bei Temperatur von jeweils 40°C und 50°C solange gemessen, bis die Viskosität von 1000 mPa∗s erreicht worden ist. Die Viskosität, bei der die härtbare Epoxidharz-Matrix 1000 mPa∗s erreicht, dient als Messgrenze, an welcher die Zeit zum Erreichen der Messgrenze den Vergleich zwischen der zum erfindungsgemäßen Verfahren gehörigen härtbaren Epoxidharz-Matrix und üblichen aminischen und anhydridischen Epoxidharz-Matrices für das Verfahren zur Herstellung von Druckgaszylindern darstellt.

Ein wichtiger Punkt im Sinne des erfindungsgemäßen Verfahrens zur Herstellung eines Druckgasbehälters mit Hilfe der härtbaren Epoxidharz-Matrix ist, dass auf Grund der Eigenschaft über einen Zeitraum von mindestens 48 Stunden flüssig zu sein und eine Viskosität im Bereich von 200 bis 1000 mPa∗s aufzuweisen, diese härtbare Epoxidharz-Matrix besonders bei Druckgaszylindern mit größeren Volumina Vorteile bringt. Diese Druckgaszylinder können mehr Verarbeitungszeit in Anspruch nehmen, wobei die härtbare Matrix durch die über einen langen Zeitraum konstant bleibende Viskosität zu einer gleichbleibenden Benetzung der Verstärkungsfasern führt.

Somit ist auch ein Verfahren zur Herstellung eines Druckgasbehälters, insbesondere ein kontinuierliches Verfahren zur Herstellung eines Druckgasbehälters, der ein Speichervolumen für ein unter Druck stehendes Gas und eine das Speichervolumen einschließende Hülle aufweist, wobei die Hülle einen mit dem Speichervolumen im Kontakt stehenden Liner und, zumindest bereichsweise, mindestens eine auf den Liner aufgebrachte zweite Schicht umfasst, Gegenstand der vorliegenden Erfindung, das die Verfahrensschritte a) bis d) umfasst, wobei die härtbare Epoxidharz-Matrix bei einer Temperatur im Bereich von 40 bis 50 °C über einen Zeitraum von mindestens 48 Stunden eine Viskosität im Bereich von 200 bis 1000 mPa∗s aufweist und die Abweichung der Viskosität bei einer Temperatur im Bereich von 40 bis 50 °C über einen Zeitraum von mindestens 48 Stunden höchstens +/- 15 %, insbesondere höchstens +/- 10 %, insbesondere höchstens +/- 8 %, beträgt.

Des Weiteren ist es möglich eine kontinuierliche Produktion auf Grund der hohen Latenz zu ermöglichen. Somit ist es erstmalig möglich mindestens 48 Stunden lang mit der hergestellten Epoxidharz-Matrix zu wickeln. Da im Wickelprozess durch die Imprägnierung von Verstärkungsfasern laufend Epoxidharz-Matrix verbraucht wird, muss für einen kontinuierlichen Prozess härtbare Epoxidharz-Matrix nachgefüllt werden. Durch die Wiederauffüllung von frischer härtbarer Epoxidharz-Matrix verdünnt sich die alte, im Imprägnierbad befindliche Matrix und verlängert somit zusätzlich die Latenz der Matrix, also über die 48 Stunden hinaus. Mit derzeit üblich verwendeten Epoxidharz-Matrices, die Härter aus der Gruppe der Amine oder Anhydride enthalten, ist ein Nachfüllen bzw. Wiederauffüllen nur begrenzt möglich. Wickelverfahren, die derartige Epoxidharz-Matrices verwenden, müssen nach 4 bis 8 Stunden gestoppt werden, damit die Anlage komplett gereinigt werden kann.

Somit ist auch ein kontinuierliches Verfahren zur Herstellung von Druckgasbehältern, die jeweils ein Speichervolumen für ein unter Druck stehendes Gas und eine das Speichervolumen einschließende Hülle aufweisen, wobei die Hülle einen mit dem Speichervolumen im Kontakt stehenden Liner und, zumindest bereichsweise, mindestens eine auf den Liner aufgebrachte zweite Schicht umfasst, Gegenstand der vorliegenden Erfindung, das die folgenden Verfahrensschritte umfasst:

a) Bereitstellen

    i) eines Liners,

ii) einer härtbaren Epoxidharz-Matrix und

iii) Verstärkungsfasern,

b) Beaufschlagen der Verstärkungsfasern mit der härtbaren Epoxidharz-Matrix, wobei die härtbare Epoxidharz-Matrix eine Temperatur im Bereich von 15 bis 50 °C aufweist,

c) Aufwickeln, Legen oder Aufbringen der Verstärkungsfasern auf den Liner zur Bildung der zweiten Schicht,

d) Nachfüllen, insbesondere kontinuierliches Nachfüllen, der härtbaren Epoxidharz-Matrix in einer Menge, die derjenigen Menge entspricht, die während des Beaufschlagens der Verstärkungsfasern entnommen wurde,

e) Härten der zweiten Schicht bei einer Temperatur im Bereich von 70 bis 140 °C;

wobei die härtbare Epoxidharz-Matrix bei der Temperatur im Bereich von 40 bis 50 °C über einen Zeitraum von mindestens 48 Stunden eine Viskosität im Bereich von 200 bis 1000 mPa∗s aufweist.

Bevorzugt ist ein kontinuierliches Verfahren, in dem Verfahrensschritt d) derart durchgeführt wird, dass die Nachfüllmenge 2 bis 8 kg Epoxidharzmatrix pro Stunde, insbesondere 2 bis 6 kg Epoxidharzmatrix pro Stunde beträgt.

Durch die Temperierung des Imprägnierbades und somit der härtbaren Epoxidharz-Matrix auf eine Temperatur zwischen 40 bis 50°C, ist die Matrix unberührt von den in den Produktionsräumen vorherrschenden, äußeren Temperatureinflüssen. Die immer gleichbleibende Temperatur der Matrix führt somit zu einer gleichbleibenden, temperaturkontrollierten Imprägnierviskosität. Durch die konstante Viskosität und somit die konstante Imprägnierung besteht die Möglichkeit eine gleichbleibende Qualität bei der Herstellung gewickelter Druckgasbehälter zu erzielen.

Des Weiteren bietet die hohe Latenz der härtbaren Epoxidharz-Matrix noch die Möglichkeit einen 1K-Batch (1 Komponenten-Batch) für einen oder mehrere Produktionstage herzustellen an. Somit kann für einen definierten Produktionszeitraum eine größere Menge der härtbaren Epoxidharz-Matrix vorgemischt, bei Raumtemperatur gelagert und bei Bedarf entnommen werden. Durch die Herstellung eines großen Batchs wird ebenso die Qualität gegenüber mehreren neu gemischten Matrizes verbessert, da immer die gleiche Abmischung verwendet wird.

Durch die hohe Latenz, der Möglichkeit einer kontinuierlichen Produktion und der Herstellung einer großen Menge der härtbaren Epoxidharz-Matrix als Batch für eine Produktion, kann daraus eine Reduktion an ausschüssiger, härtbarer Epoxidharz-Matrix resultieren. Dazu kann die Reinigung des Imprägnierbades mit eingerechnet werden, in welchem ebenso bei jedem Reinigungsvorgang neben den härtbaren Epoxidharz-Resten auch Reinigungsmittel, wie z.B. Aceton verbraucht und entsorgt werden müssen. Werden alle Aspekte einbezogen ist es möglich weniger Abfälle zu erzeugen, weitere Kosten für die Reinigung und Entsorgung zu sparen und umweltfreundlicher zu produzieren.

Erfindungswesentlich wird das Verfahren derart ausgeführt, dass das Beaufschlagen der Verstärkungsfasern mit der härtbaren Epoxidharz-Matrix bei einer Temperatur im Bereich von 15 bis 50 °C erfolgt. Bevorzugt kann das Verfahren derart ausgeführt werden, dass die härtbare Epoxidharz-Matrix in Verfahrensschritt b) eine Temperatur im Bereich von 20 bis 50 °C, vorzugsweise im Bereich von 25 bis 50 °C, vorzugsweise im Bereich von 30 bis 50 °C, besonders bevorzugt eine Temperatur im Bereich 40 bis 50 °C aufweist.

Hierdurch wird über die Temperatureinstellung der härtbaren Epoxidharz-Matrix bis zu einer Temperatur von 50°C die Imprägnierviskosität der Matrix im Imprägnierbad eingestellt. Dabei kann eine Imprägnierviskosität von 200 bis 1000 mPa∗s, insbesondere von 300 bis 900 mPa∗s, eingestellt werden. Zudem sind bevorzugte Temperaturen der Epoxidharz-Matrix im Bereich 40 bis 50 °C höher als die Umgebungstemperaturen in den Produktionsstätten, sodass die Temperatur bzw. die Viskosität der härtbaren Epoxidharz-Matrix unberührt bleibt und dadurch ein qualitativ konstantes Beaufschlagen der Verstärkungsfasern durch gleichbleibende Imprägnierviskosität über einen längeren Produktionszeitraum ermöglicht wird.

Für das erfindungsgemäße Verfahren zur Herstellung eines Druckgasbehälters wird somit eine Epoxidharz-Matrix benötigt, die sich in Folge des Faserwickelverfahrens leicht auf die Verstärkungsfaser durch Imprägnierung beaufschlagen lässt. Eine relevante Größe für die optimale Beaufschlagung der Epoxidharz-Matrix auf die Verstärkungsfaser ist die Imprägnierviskosität. Hierbei muss diese so eingestellt werden, dass das Gewichtsverhältnis Verstärkungsfaser zu Epoxidharz-Matrix im Bereich von 50 zu 50 bis 80 zu 20 liegt. Wie dem Anwender bekannt, sind diese Bereiche des Gewichtsverhältnisses favorisiert, da bei zu geringer Beaufschlagung der Epoxidharz-Matrix ein hoher Gewichtsanteil der Verstärkungsfaser resultiert und auf Grund einer prozessseitig gesteuerten, maximalen Packungsdichte der Verstärkungsfasern, Fehlverklebungen entstehen können. Zu hohe Beaufschlagung der Epoxidharz-Matrix kann die Packungsdichte der Verstärkungsfasern verringern. Für beide Fälle resultiert dadurch eine Reduzierung der mechanischen Eigenschaften wie E-Modul oder Zugfestigkeiten des ausgehärteten Compositbauteils.

Gemäß einem weiterführenden Gedanken ist somit auch ein Verfahren Gegenstrand der Erfindung in dem das Beaufschlagen der Verstärkungsfasern mit der härtbaren Epoxidharz-Matrix derart erfolgt, dass die zweite Schicht ein Gewichtsverhältnis Verstärkungsfaser zu Epoxidharz-Matrix im Bereich von 50 zu 50 bis 80 zu 20 aufweist, bevorzugt im Bereich von 60 zu 40 bis 80 zu 20 aufweist.

Um für das erfindungsgemäße Verfahren ein optimales Beaufschlagen der Verstärkungsfasern mit der Epoxidharz-Matrix zu garantieren und somit auch die zweite Schicht ein Gewichtsverhältnis Verstärkungsfaser zu Epoxidharz-Matrix im Bereich von 50 zu 50 bis 80 zu 20 aufweist, ist es notwendig, dass die zum erfindungsgemäßen Verfahren entwickelte Epoxidharz-Matrix vor der Härtung einen durchschnittlichen EEW-Wert im Bereich von 100 bis 250 g/eq aufweist, somit die Epoxidharz-Matrix ein niederes Molekulargewicht besitzt und damit auch niederviskos vorliegt. Neben dieser für das Beaufschlagen der Epoxidharz-Matrix relevanten Eigenschaft kommt hinzu, dass die härtbare Epoxidharz-Matrix eine Imprägnierviskosität von 300 bis 900 mPa∗s, insbesondere von 400 bis 800 mPa∗s, insbesondere von 400 bis 700 mPa∗s, bei 40 bis 50°C besitzt, da diese bei der Temperatur für die Imprägnierung der Verstärkungsfaser ausreichend niederviskos und diese bei 40 bis 50°C unberührt von den in den Produktionsräumen vorherrschenden, äußeren Temperatureinflüssen ist. Somit ist eine optimale Imprägnierung der Verstärkungsfasern mit der nach dem erfindungsgemäßen Verfahren genutzten Epoxidharz-Matrix möglich, welche zu einer hohen, mechanischen Performance des ausgehärteten Druckgasbehälters führt.

Erfindungswesentlich wird das Verfahren derart ausgeführt, dass die Epoxidharz-Matrix bei einer Temperatur im Bereich von 40 bis 50 °C eine Viskosität von 200 bis 1000 mPa∗s aufweist. Bevorzugt ist hierbei, dass die Epoxidharz-Matrix bei einer Temperatur im Bereich von 40 bis 50 °C eine Viskosität von 300 bis 900 mPa∗s, insbesondere von 400 bis 800 mPa∗s, insbesondere von 400 bis 700 mPa∗s, aufweist.

Die Härtung der zweiten Schicht kann in einem Temperaturbereich von 70 bis 110 °C erfolgen. Somit ist auch ein Verfahren Gegenstand der vorliegenden Erfindung, indem die Härtung der zweiten Schicht bei einer konstanten Temperatur im Bereich von 70 bis 110 °C erfolgt.

Gemäß der vorliegenden Erfindung kann das Verfahren besonders vorteilhaft ausgeführt werden, wenn die härtbare Epoxidharz-Matrix die folgenden Komponenten i) bis iii) umfasst, nämlich

i) mindestens ein Epoxidharz mit mindestens einer Epoxidgruppe,
ii) mindestens einen Reaktivverdünner aus der Gruppe der Glycidylether,
iii) mindestens einen Härter, insbesondere einen flüssigen Härter, insbesondere aus der Gruppe der Cyanamid-haltigen Härter.

Die härtbare Epoxidharz-Matrix ist vor allem so zusammengestellt, dass diese neben dem Bereitstellen der Eigenschaften für faserverstärkte Druckgasbehälter auch den Ansprüchen des erfindungsgemäßen Verfahrens zur Herstellung des Druckgasbehälters gerecht wird. Hierbei werden bifunktionelle Epoxidharze und/ oder Epoxidharze mit einem durchschnittlichen EEW-Wert von 150 bis 200 g/eq bevorzugt. Dabei sollen die quervernetzenden Eigenschaften durch die Bifunktionalität des Epoxidharzes die mechanischen Eigenschaften des Druckgasbehälters verstärken, im gleichen Zuge aber niederviskos für die optimale Beaufschlagung von Verstärkungsfasern sein.

Gleiches gilt für den Reaktivverdünner, welcher zudem die Epoxidharz-Matrix weiter verdünnt. Hierbei wird ebenso ein bifunktionaler Glycidylether gewählt, um den Leistungseigenschaften des Druckgasbehälters gerecht zu werden.

Der flüssige Cyanamid-haltige Härter zählt zu den latenten Flüssighärtern und ermöglicht in der härtbaren Epoxidharzmatrix eine lange Verarbeitungszeit des Harzes für das erfindungsgemäße Verfahren.

Durch den Zusatz weiterer handelsüblicher Additive, wie sie dem Fachmann für die Anwendung bei diesem Verfahren zur Prozessierung und zur Härtung von Epoxidharz-Matrices bekannt sind, kann das Härtungsprofil der erfindungsgemäßen Formulierungen variiert werden.

Additive zur Verbesserung der Verarbeitbarkeit der unausgehärteten Epoxidharz-Zusammensetzungen oder Additive zur Anpassung der thermisch-mechanischen Eigenschaften der hieraus hergestellten duroplastischen Produkte an das Anforderungsprofil umfassen beispielsweise Füllstoffe, Rheologieadditive wie Thixotropierungsmittel oder Dispergieradditive, Defoamer, Farbstoffe, Pigmente, Zähmodifikatoren, Schlagzähverbesserer, oder Brandschutzadditive.

Im Hinblick auf die einzusetzenden Epoxidharze kommen sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolaken sowie auf Basis von Anilin oder substituierten Anilinen wie beispielsweise p-Aminophenol oder 4,4'-Diaminodiphenylmethane sind besonders bevorzugt. Ganz besonders bevorzugt sind Epoxidharze auf Basis Glycidylpolyether von 2,2-Bis(4-hydroxyphenyl)-propan (Bisphenol A) sowie Epoxidharze auf Basis Glycidylpolyether von 2,2-Bis(4-hydroxyphenyl)methan (Bisphenol F). Solche Epoxidharze können durch Verwendung der hierin bevorzugten Härterzusammensetzung besonders gut gehärtet werden. In Bezug auf das erfindungsgemäße Verfahren soll vorzugsweise eines oder Kombinationen aus den gelisteten Harzen in Kombination mit einem Reaktivverdünner und einem Härter eine Epoxidharz-Matrix bilden, welche einen durchschnittlichen EEW-Wert im Bereich von 100 bis 250 g/eq aufweist.

Gemäß der vorliegenden Erfindung sind ganz besonders bevorzugt solche Epoxidharze einsetzbar, die als "low-viscos modified bisphenol A" bezeichnet werden können. Diese Epoxidharze weisen bei Raumtemperatur (25 °C) eine dynamische Viskosität von 4000 bis 6000 mPa∗s auf. Somit sind weiter bevorzugt Epoxidharze auf Basis Glycidylpolyether von 2,2-Bis(4-hydroxyphenyl)-propan (Bisphenol A) sowie Epoxidharze auf Basis Glycidylpolyether von 2,2-Bis(4-hydroxyphenyl)methan (Bisphenol F) einsetzbar, die bei Raumtemperatur (25 °C) eine dynamische Viskosität von 4000 bis 6000 mPa∗s aufweisen.

Ganz besonders bevorzugt sind Epoxidharze auf Basis Glycidylpolyether von 2,2-Bis(4-hydroxyphenyl)-propan (Bisphenol A) sowie Epoxidharze auf Basis Glycidylpolyether von 2,2-Bis(4-hydroxyphenyl)methan (Bisphenol F) einsetzbar, die bei Raumtemperatur (25 °C) eine dynamische Viskosität von 4000 bis 6000 mPa∗s aufweisen und die einen durchschnittlichen EEW-Wert im Bereich von 100 bis 250 g/eq, insbesondere im Bereich von 100 bis 210 g/eq, insbesondere im Bereich von 100 bis 190 g/eq aufweisen.

Somit kann in dem erfindungsbemäßen Verfahren besonders bevorzugt eine härtbare Epoxidharz-Matrix eingesetzt werden, die vor der Härtung einen durchschnittlichen EEW-Wert im Bereich von 100 bis 250 g/eq aufweist.

Weiterhin kann in dem erfindungsbemäßen Verfahren besonders bevorzugt eine härtbare Epoxidharz-Matrix eingesetzt werden, die ein Epoxidharz aus der Gruppe der bifunktionellen Epoxidharze umfasst und/ oder die ein Epoxidharz, insbesondere ein bifunktionelles Epoxidharze, umfasst, das einen durchschnittlichen EEW-Wert von 150 bis 200 g/eq aufweist.

Weiterhin kann in dem erfindungsbemäßen Verfahren besonders bevorzugt eine härtbare Epoxidharz-Matrix eingesetzt werden, die einen Reaktivverdünner ausgewählt aus der Gruppe der bifunktionellen Glycidylether umfasst und/oder die einen Glycidylether umfasst, insbesondere einen bifunktionellen Glycidylether, der einen durchschnittlichen EEW-Wert von 100 bis 200 g/eq aufweist.

Gemäß einer besonders bevorzugten Ausführung des Verfahrens umfasst die Epoxidharz-Matrix einen Härter, insbesondere einen flüssigen Härter, der in seiner Zusammensetzung Cyanamid (CAS 420-04-2; NC-NH$_2$) beinhaltet. Die Wirkungsweise dieser Härter, insbesondere flüssigen Härter, im Epoxidharz ist vergleichbar zu den Härtungseigenschaften von mit Imidazolen beschleunigtem Dicyandiamid. Im Gegensatz zu Epoxidharzzusammensetzungen, die typische Aminhärtern enthalten, bleibt jedoch bei Raumtemperatur eine Latenz von mehreren Tagen erhalten. Zudem können mit dem Cyanamid-basierten Flüssighärter gehärtete Polymerharze bereitgestellt werden, die im Vergleich zu mit Aminhärtern gehärteten Polymerharzen hohe Glasübergangstemperaturen aufweisen.

Insgesamt kann somit ein Härter oder eine Härterzusammensetzung, insbesondere ein flüssiger Härter, zur Verfügung gestellt werden, der/die aufgrund der hohen Latenz in den Polymerharz-Zusammensetzungen sowie der hohen Reaktivität in den Polymerharz-Zusammensetzungen bei der Härtungstemperatur hervorragend für den Einsatz für das erfindungsgemäße Verfahren zur Herstellung eines Druckgaszylinders mittels Faserwickeln geeignet ist.

Als Reaktiwerdünner können in dem erfindungsgemäßen Verfahren bzw. in der Epoxidharz-Matrix insbesondere Glycidylether zum Einsatz gebracht werden. Dabei können weiter bevorzugt monofunktionelle, di-, sowie polyfunktionellen Glycidylether eingesetzt werden. Hier sind insbesondere Glycidylether, Diglycidylether, Triglycidylether, Polyglycidylether und Multiglycidylether und deren Kombinationen zu nennen. Besonders bevorzugt können Glycidylether aus der Gruppe umfassend 1,4-Butandiol-Diglycidylether, Trimethylolpropan-Triglycidylether, 1,6-Hexandiol-Diglycidylether, Cyclohexandimethanol-Diglycidylether, C$_8$-C$_{10}$-Alkohol-Glycidylether, C$_{12}$-C$_{14}$-Alkohol-Glycidylether, Kresol-Glycidylether, Poly(tetramethylenoxid)-Diglycidylether, 2-Ethylhexyl-Glycidylether, Polyoxypropylenglycol-Diglycidylether, Polyoxypropylenglycol-Triglycidylether, Neopentylglykol-Diglycidylether, p-tert-Butylphenol-Glycidylether, Polyglycerol-Multiglycidylether, sowie deren Kombinationen eingesetzt werden.

Ganz besonders bevorzugte Glycidylether sind 1,4-Butandiol-Diglycidylether, Trimethylolpropan-Triglycidylether, Neopentylglykol-Diglycidylether, 1,6-Hexandiol-Diglycidylether, Cyclohexandimethanol-Diglycidylether sowie deren Kombinationen. Diese Reaktivverdünner können zur Einstellung der Viskosität des Epoxidharzes verwendet werden. Hierbei können monofunktionelle Glycidylether mit dem Epoxidharz reagieren ohne eine Quervernetzung auszubilden. Daher wird für das erfindungsgemäße Verfahren mindestens ein bifunktionaler Glycidylether, ein Diglycidylether, zur Einstellung der Imprägnierviskosität genutzt. Dieser soll dazu beitragen, dass auch eine Quervernetzung der härtbaren Epoxidharz-Matrix möglich ist, um gute mechanische Eigenschaften für den Druckgasbehälter zu erzielen. Zudem weist der Diglycidylether vorzugsweise einen durchschnittlichen EEW-Wert von 100 bis 200 g/eq auf und hat somit ein kleines Molekulargewicht, in Folge dessen eine niedrigere Viskosität, gegenüber Diglycidylethern mit höherem EEW.

Hinsichtlich der Auswahl der zu verwendenden Verstärkungsfasern können in dem hierin beschriebenen Verfahren insbesondere Verstärkungsfasern ausgewählt aus der Gruppe Kohlenstofffasern, Glasfasern, Aramidfaser und Basaltfaser eingesetzt werden.

Diese Verstärkungsfasern können weiter bevorzugt in Form von Filamenten, Fäden, Garnen, Geweben, Geflechten oder Gewirken bereitgestellt oder eingesetzt werden.

Des Weiteren können auch Verstärkungsfasern aus Siliciumcarbid, Aluminiumoxid, Graphit, Wolframcarbid, Bor ausgewählt werden. Des Weiteren können auch Verstärkungsfasern ausgewählt werden aus der Gruppe der Naturfasern wie Samenfasern (z.B. Kapok, Baumwolle), Bastfasern (z.B. Bambus, Hanf, Kenaf, Flachs) Blattfaser (wie Henequen, Abac). Ebenso können auch Kombinationen aus den Fasern für das erfindungsgemäße Verfahren verwendet werden.

Von den erwähnten Verstärkungsfasern werden vor allem Glasfasern und Kohlenstofffasern, insbesondere in Form von Filamenten, Fäden oder Garnen, bevorzugt. Diese Verstärkungsfasern weisen besonders gute mechanische Eigenschaften, insbesondere eine hohe Zugfestigkeit, auf.

Wie eingangs erwähnt ist die Wahl der Liner abhängig von dem Typ des herzustellenden Druckgasbehälters. Somit können in dem erfindungsgemäßen Verfahren sowohl thermoplastische Liner, insbesondere Liner aus HD-Polyethylen oder Polyamid, sowie auch metallische Liner, insbesondere Liner aus Aluminium oder Stahl, eingesetzt werden. Der Liner kann auch als erste Schicht angesehen werden, auf den erfindungsgemäß die zweite Schicht umfassend die Epoxidharz-Matrix und Verstärkungsfasern aufgebracht wird.

Im Folgenden wird die vorliegende Erfindung anhand von Zeichnungen und zugehörigen Beispielen näher erläutert. Hierbei zeigt:

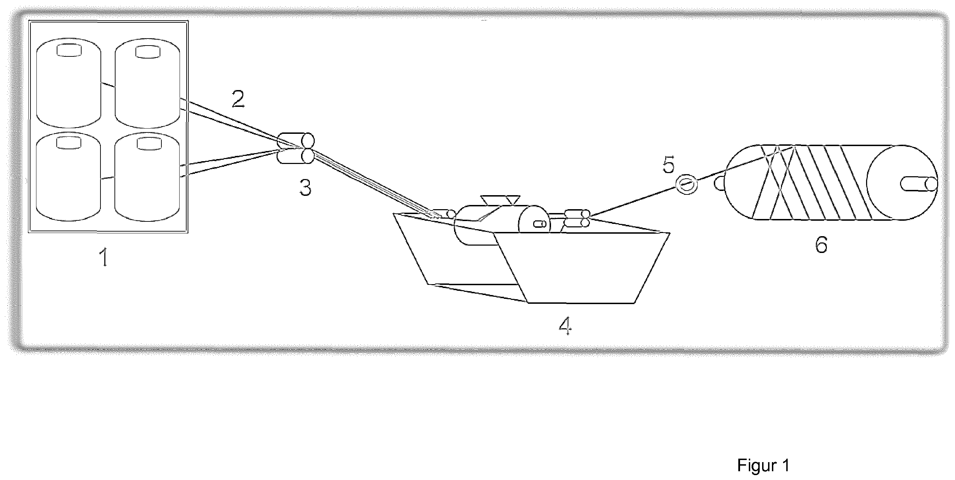

Figur 1: Eine einfache schematische Ansicht des Faserwickelprozesses zur Herstellung eines Druckgasbehälters gemäß vorliegender Erfindung.

Mit Figur 1 wird schematisch eine Wickelanlage zum Herstellen eines Druckgasbehälters dargestellt. Hierbei werden ausgehend vom Spulenständer-System (1) die Verstärkungsfasern (2) über eine Verstärkungsfaserführung (3) zum beheizbaren Imprägnierbad (4) mit Imprägnierwalze, Harzabstreifer und Verstärkungsfaserführung gezogen. Den Zug der Verstärkungsfasern durch das Imprägnierbad (4) wird durch die Rotation der Einspannvorrichtung mit Liner (6) erzeugt, an dem die Verstärkungsfaserbündel zu Beginn des Prozesses fixiert wurden. Durch den Zug werden die Verstärkungsfasern an der Imprägnierwalze mit der härtbaren Epoxidharz-Matrix benetzt, mit Hilfe des Harzabstreifers überschüssiges Harz abgestreift und einer Verstärkungsfaserführung in Richtung des Auslaufkopfes (5) gezogen. Der Auslaufkopf (5) steuert die Platzierung der Verstärkungsfasern auf den Liner (6).

Die nachfolgenden Beispiele des Verfahrens wurden mit einer dieser prinzipiellen Anordnung entsprechenden Anlage durchgeführt.

Beispiele

1) Härtbare Epoxidharz-Matrices

a) Eingesetzte Rohstoffe

Komponente (A)    Produktname: DYHARD® RF2100 (AlzChem Trostberg GmbH) Modifiziertes, bifunktionelles Bisphenol A Epoxidharz (EEW = 170 - 190 g/eq) (Viskosität bei 25°C = 4000 - 6000 mPa∗s)

Komponente (B)    Produktname: DYHARD® Fluid 212 (AlzChem Trostberg GmbH) Cyanamid-basierter Flüssighärter (Viskosität bei 25°C = 80 - 160 mPa∗s)

Komponente (C)    Produktname: EPON RESIN 828 (Hexion Inc.) Unmodifiziertes Bisphenol A Epoxidharz (EEW = 185 - 192 g/eq) (Viskosität bei 25°C = 11 - 16 Pa∗s)

Komponente (D)    Produktname: Jeffamine® T-403 (Huntsman Cooperation) Aminischer Flüssighärter (Viskosität bei 25°C = 72 mPa∗s)

Komponente (E)    Produktname: Araldite® LY 1564 SP (Huntsman Cooperation) Formuliertes, Bisphenol A basiertes Epoxidharz (Epoxidgehalt = 5,8 - 6,05 eq/kg) (Viskosität bei 25°C = 1200 - 1400 mPa∗s)

Komponente (F)    Produktname: Aradur® 917 (Huntsman Cooperation) Anhydridischer Flüssighärter (Viskosität bei 25°C = 50 - 100 mPa∗s)

Komponente (G)    Produktname: DMP-30™ (Sigma-Aldrich Chemie GmbH) Beschleuniger: 2,4,6-tris(dimethylaminomethyl)phenol

Komponente (H)    Produktname: Araldite® LY 1556 SP (Huntsman Cooperation) Bisphenol A basiertes Epoxidharz (Epoxidgehalt = 5,30 - 5,45 eq/kg) (Viskosität bei 25°C = 10 - 12 Pa∗s)

Komponente (I)    Produktname: 1-Methylmidazol (Carl Roth GmbH & Co KG) Beschleuniger

b) Herstellung der Matrices

Zu den jeweiligen Epoxidharzen (Komponenten A, C, E, H) werden die jeweiligen Flüssighärter (Komponenten B, D, F) und bei den anhydridischen Flüssighärtern (Komponente F) die jeweiligen Beschleuniger (Komponente G oder I) zugegeben und bis zur Homogenität verrührt. Jeweils 100g der Formulierung wird anschließend für Gelzeitmessungen entnommen. Parallel wird die isotherme Viskosität am Viskosimeter gemessen. Ein kleiner Anteil der Mischung wird für die Messungen am DSC entnommen. Für den Wickelprozess wird die jeweils hergestellte, härtbare Epoxidharz-Matrix auf 40°C erwärmt und in das temperierte Imprägnierbad gegeben. Bei Temperaturkonstanz beginnt der Faserwickelprozess.

Tabelle 1: Zusammensetzung erfindungsgemäßer härtbarer Epoxidharz Matrix 1 und Vergleichsmatrices 2, 3 und 4

| Zusammensetzung | Matrix 1 | Matrix 2 | Matrix 3 | Matrix 4 |
|---|---|---|---|---|
| Komponente A | 100 | -- | -- | -- |
| Komponente B | 10 | -- | -- | -- |
| Komponente C | -- | 100 | -- | -- |
| Komponente D | -- | 43 | -- | -- |
| Komponente E | -- | -- | 100 | -- |
| Komponente F | -- | -- | 98 | 90 |
| Komponente G | -- | -- | 3 | -- |
| Komponente H | -- | -- | -- | 100 |
| Komponente I | | | | 1 |

c) Testvorschriften zur Überprüfung der Materialeigenschaften

DSC:

Mettler Toledo DSC 1

Dynamische DSC:

Eine Probe der Formulierung wird mit einer Heizrate von 10 K/min von 30 - 250 °C aufgeheizt. Die Auswertung des exothermen Reaktionspeaks erfolgt durch Bestimmung der Onset-Temperatur ($T_{Onset}$), der Temperatur im Peak-Maximum ($T_{Max}$) sowie der Peakfläche als Maß für die freigesetzte Reaktionswärme ($\Delta_R H$).

Isotherme DSC:

Eine Probe der Formulierung wird bei der angegebenen Temperatur für die angegebene Zeit konstant gehalten (isotherme Härtung der Formulierung). Die Auswertung erfolgt durch Bestimmung der Zeit des Peak-Maximums (als Maß für das Anspringen des Aushärtevorgangs) sowie des 90 %-Umsatzes (als Maß für das Ende des Aushärtevorgangs) des exothermen Reaktionspeaks.

Rheometer:

Anton Paar MCR 302 mit CTD 450

Isotherme Viskosität:

Der Isotherme Viskositätsverlauf einer Probe bei 40°C und 50°C wird am Anton Paar Viskosimeter MCR302 mit dem Messsystem D-PP25 (1° Messkegel) bei einem Messspalt von 0,052 mm bestimmt. Bei Erreichen voreingestellten Temperatur in der Messkammer des Viskosimeters wird die Messprobe auf die Messplatte aufgetragen. Die Voreinstellung zur Messpunktaufzeichnung wurde auf eine kontinuierliche Aufzeichnung von 1 bzw. 0,5 Messpunkten pro min eingestellt.
Es wird in Rotation bei einer Scherrate von 5 1/s gemessen. Der Messkegel wird in die voreingestllte Mess-

spalthöhe von 0,052mm angefahren und die Messung wird gestartet. Nach Beendigung der Messung, wird der Messverlauf mittels der Datenaufzeichnung in der Software Rheoplus Version 3.62 ausgewertet und somit die Zeit bis zum Erreichen der Viskosität von 1000 mPa∗s der Datenaufnahme entnommen.

Gelzeit-Test:

Es wurden genau 100g der jeweiligen Formulierung in einem hergestellt und anschließend sofort bei 40°C und 50°C in einen Trockenschrank gegeben. Jede Stunde wurde die Formulierung gerührt und überprüft. Konnte die Mischung nicht mehr homogen verrührt werden, wurde die Zeit als Gelzeit dokumentiert und die Probe als nicht mehr flüssig eingestuft.

Beispiel 1 (erfindungsgemäß):

Zu 100 Gewichtsteilen der Komponente (A) werden 10 Gewichtsteile der Komponente (B) zugegeben und bis zur Homogenität verrührt. Jeweils 100g der Formulierung wird anschließend für Gelzeitmessungen entnommen. Parallel wird die isotherme Viskosität am Viskosimeter gemessen. Ein kleiner Anteil der Mischung wird für die Messungen am DSC entnommen.

Tabelle 2: Epoxidharz-Zusammensetzungen incl. Testergebnisse (Materialparameter)

| Parameter | Matrix 1 | Matrix 2 | Matrix 3 | Matrix 4 |
|---|---|---|---|---|
| Dynamisches DSC - Onset [°C] | 144 | 88 | 113 | 120 |
| Dynamisches DSC - Peak [°C] | 152 | 132 | 138 | 152 |
| Dynamisches DSC - Enthalpie [J/g] | 243 | 548 | 319 | 420 |
| Isotherme DSC bei 100 °C Zeit bis 90% Umsatz [min] | 237 | 50 | 35 | 62 |
| Gelzeit händisch bei 40°C [h] (100g Formulierung) | >240 | 3,0 | 22 | 40 |
| Gelzeit händisch bei 50°C [h] (100g Formulierung) | 144 | 1,5 | 7,5 | 14 |
| Isotherme Viskosität bei 40°C [h] * | 59 | 1,0 | 6,4 | 8,2 |
| Isotherme Viskosität bei 50°C [h]* | 95 | 0,9 | 3,4 | 6,2 |
| Startviskosität bei 40°C [mPa∗s] | 585 | 443 | 150 | 204 |
| Startviskosität bei 45°C [mPa∗s] | 388 | 314 | 100 | 150 |
| Startviskosität bei 50°C [mPa∗s] | 242 | 202 | 90 | 106 |
| * Topfzeitmessung über Rheometer; Zeit bis zum Erreichen von Viskosität 1000mPa∗s. | | | | |

Aus Tabelle 2 lässt sich entnehmen, dass aus den isothermen Viskositätsmessungen und der Bestimmung der Startviskositäten aus der isothermen Messreihe der Matrices 1-4 die Matrix 1 sowohl bei 40°C wie auch bei 50°C hohe Topfzeitwerte von 59 h bei 40°C und 95 h bei 50°C erzielt und somit über 48 h einem Viskositätsbereich von 200 bis 1000 mPa∗s liegt. Der händische Gelzeittest der Matrices 1-4 belegt zudem, dass Matrix 1 bei beiden Temperaturen weit über 48 h flüssig ist und somit ab 144 h bei 50°C und über 240 h bei 40°C erhärtet. Diese Vergleiche zeigen somit eine höhere Topfzeit und somit auch eine höhere Latenz der Matrix 1 gegenüber den Vergleichsmatrices 2-4.
Das bedeutet, dass das Matrix System 1 auf Grund der hohen Latenz die Anforderungen an Druckgaszylinder, u.a. mit größeren Volumina, Vorteile erbringt. Längere Verarbeitungszeiten mit reduzierten Reinigungsstopps und Entsorgungsrückständen sind möglich und die konstant bleibende, niedere Viskosität über die Wickelzeit kann zu gleichbleibender Benetzung der Verstärkungsfasern führen.

2) Beispiele für Liner - Herstellernachweise

Für den Versuch wurde ein HDPE (PE-HD; high density polyethylene) Liner mit einem Fassungsvermögen von 51 Litern verwendet, mit einer Gesamtlänge von 882 mm, einem Durchmesser von 314,5 mm und einem Gewicht von 8,9 kg (incl. Bossparts).

3) Beispiele für Verstärkungsfasern - Herstellernachweise

Carbonfaser: Mitsubishi Rayon MRC_37_800WD_30K
Hersteller: Mitsubishi Chemical Carbon Fiber and Composite, Inc.

4) Beispiele für Verfahren zur Herstellung von Druckgasbehälte

a) Allgemeine Verfahrensvorschrift - eventuell unter Bezugnahme auf die Zeichnungen

Mittels der Software Composicad wurde eine Wickelstruktur der Carbonfaser berechnet, welche auf einen theoretischen Berstdruck von 460 bar ausgelegt wird. Unsere Versuchsreihe basiert auf einen Zylinder, welcher für 200 bar ausgelegt ist. Die Norm fordert für diese Art von Druckbehältern einen Sicherheitsfaktor von 2,3 des Betriebsdrucks, somit einen Mindest-Berstdruck von 460 bar. Zu Beginn wird der HDPE-Liner in die Spannvorrichtung an der Wickelmaschinerie an beiden Enden befestigt, mit Aceton gereinigt und mit einem Bunsenbrenner an der Außenseite mit kleiner Flamme aktiviert. Für die Formulierung werden 100 Teile der Komponente A mit 10 Teile der Komponente B bis zur Homogenität verrührt und auf 40°C erwärmt. Anschließend wir die Formulierung in das temperierte Imprägnierbad gegeben.

Zur Einstellung der optimalen Imprägnierviskosität wird das Imprägnierbad auf 40°C erwärmt. Die Außentemperatur während des Wickelns betrug 15,9 °C. Das Abstreifmesser wurde auf einen Spalt von 0,6 mm eingestellt. Die Verstärkungsfasern aus den 8 Spulen werden durch das Bad zum Liner gezogen und am Bauteil zu einem etwa 2,7 cm breiten Streifen zusammengeführt. Der Wickelvorgang beträgt 35 Minuten. Die Wicklung erfolgt axial und radial um den Liner gemäß der Berechnungen und Einstellungen im Programm. Zur Fixierung des Verstärkungsfaserendes wird Diese als Schlaufe unter die vorletzte Wicklung gelegt und überstehende Fasern abgeschnitten. Die Härtung erfolgte bei 95°C für 8 Stunden. Der Zylinder wurde waagerecht in den Ofen gehängt und während des Härtens rotiert.

b) Testvorschriften

Bersttest nach ISO11439
Druckwechseltest nach ISO11439 und NGV02

c) Testergebnisse

Der ausgehärtete Zylinder hat ein Gewicht von 17,70 kg. Der Durchmesser beträgt 330 mm.
Für die Wicklung wurden insgesamt 5,494 kg Carbonfaser verwendet. Somit beträgt die Menge an Formulierung 3,306 kg.
Bersttest: Maximator Manometer analoog 0-2500 bar (Seriennummer 247298001), GS 4200 USB pressure transducer (Seriennummer 510305)

Tabelle 3: Erzielter Berstdruck und Faserspannung und daraus berechnete
Performances

| | |
|---|---|
| Berstdruck [bar] | 519 |
| Erreichte Faserspannung [MPa] | 3000 |
| Behälter Performance | 1495,4 |
| Laminat Performance | 3007,8 |

$$\text{Behälter Performance: } \frac{(Berstdruck \times Zylindervolumen)}{Masse \ ausgehärteter \ Zylinder} \times 1000$$

$$\text{Laminat Performance: } \frac{(Berstdruck \times Zylindervolumen)}{Masse \ ausgehärtetes \ Laminat} \times 1000$$

Druckwechseltest: Galiso Manometer analoog 0-11,000 PSI (Seriennummer 508130013)

Tabelle 4: Erzielte Ergebnisse aus dem Druckwechseltest bei Raumtemperatur.

| Anzahl Zyklen (Zyklen) | 61432 |
|---|---|
| Anzahl gültiger Zyklen (Zyklen) | 61372 |
| Max. Temperatur [°C] | 39,4 |
| Durchschnittliche Zyklusrate (Zyklen/min) | 9,1 |
| Durchschnittlicher Druck min. [bar] | 2,7 |

Nach dem Test wurde der Zylinder inspiziert und wies keine äußerlichen Mängel auf. Beim Durchschneiden in zwei Hälften konnte nur im HDPE-Liner ein kleiner Riss nach 61432 Zyklen festgestellt werden. Das Laminat blieb unbeschädigt.

**Patentansprüche**

1. Verfahren zur Herstellung eines Druckgasbehälters, der ein Speichervolumen für ein unter Druck stehendes Gas und eine das Speichervolumen einschließende Hülle aufweist, wobei die Hülle einen mit dem Speichervolumen im Kontakt stehenden Liner (6) und, zumindest bereichsweise, mindestens eine auf den Liner (6) aufgebrachte zweite Schicht umfasst, wobei das Verfahren die folgenden Verfahrensschritten umfasst:

   a) Bereitstellen

      i) eines Liners (6),
      ii) einer härtbaren Epoxidharz-Matrix und
      iii) Verstärkungsfasern (2),

   b) Beaufschlagen der Verstärkungsfasern (2) mit der härtbaren Epoxidharz-Matrix, wobei die härtbare Epoxidharz-Matrix eine Temperatur im Bereich von 15 bis 50 °C aufweist,
   c) Aufwickeln, Legen oder Aufbringen der Verstärkungsfasern (2) auf den Liner (6) zur Bildung der zweiten Schicht,
   d) Härten der zweiten Schicht bei einer Temperatur im Bereich von 70 bis 140 °C;

   **dadurch gekennzeichnet, dass** die härtbare Epoxidharz-Matrix bei einer Temperatur im Bereich von 40 bis 50 °C über einen Zeitraum von mindestens 48 Stunden eine Viskosität im Bereich von 200 bis 1000 mPa∗s aufweist.

2. Verfahren gemäß Anspruch 1, **dadurch gekennzeichnet, dass** die härtbare Epoxidharz-Matrix in Verfahrensschritt b) eine Temperatur im Bereich von 20 bis 50 °C, vorzugsweise im Bereich von 25 bis 50 °C, vorzugsweise im Bereich von 30 bis 50 °C, besonders bevorzugt eine Temperatur im Bereich 40 bis 50 °C aufweist.

3. Verfahren gemäß mindestens einem der vorgenannten Ansprüche, **dadurch gekennzeichnet, dass** das Beaufschlagen der Verstärkungsfasern (2) mit der Epoxidharz-Matrix derart erfolgt, dass die zweite Schicht ein Gewichtsverhältnis Verstärkungsfaser zu Epoxidharz-Matrix im Bereich von 50 zu 50 bis 80 zu 20 aufweist.

4. Verfahren gemäß mindestens einem der vorgenannten Ansprüche, **dadurch gekennzeichnet, dass** die Epoxidharz-Matrix bei einer Temperatur im Bereich von 40 bis 50 °C eine Viskosität von 300 bis 900 mPa*s, insbesondere von 400 bis 800 mPa*s, insbesondere von 400 bis 700 mPa*s, bei 40 °C aufweist.

5. Verfahren gemäß mindestens einem der vorgenannten Ansprüche, **dadurch gekennzeichnet, dass** die Härtung der zweiten Schicht bei einer Temperatur im Bereich von 70 bis 120 °C erfolgt.

6. Verfahren gemäß mindestens einem der vorgenannten Ansprüche, **dadurch gekennzeichnet, dass** die Epoxidharz-Matrix umfasst:

   i) mindestens ein Epoxidharz mit mindestens einer Epoxidgruppe,

ii) mindestens einen Reaktivverdünner aus der Gruppe der Glycidylether,
iii) mindestens einen Härter, insbesondere einen flüssigen Härter, insbesondere aus der Gruppe der Cyanamid-haltigen Härter.

7. Verfahren gemäß mindestens einem der vorgenannten Ansprüche, **dadurch gekennzeichnet, dass** die Epoxidharz-Matrix vor der Härtung einen durchschnittlichen EEW-Wert im Bereich von 100 bis 250 g/eq aufweist.

8. Verfahren nach Anspruch 6, **dadurch gekennzeichnet, dass** das Epoxidharz ausgewählt wird aus der Gruppe der bifunktionellen Epoxidharze und/ oder dass das Epoxidharz einen durchschnittlichen EEW-Wert von 150 bis 200 g/eq aufweist.

9. Verfahren nach Anspruch 7, **dadurch gekennzeichnet, dass** der Reaktivverdünner ausgewählt wird aus der Gruppe der bifunktionellen Glycidylether und/ oder dass der Glycidylether einen durchschnittlichen EEW-Wert von 100 bis 200 g/eq aufweist.

10. Verfahren gemäß mindestens einem der vorgenannten Ansprüche, **dadurch gekennzeichnet, dass** Verstärkungsfasern (2) ausgewählt werden aus der Gruppe Kohlenstofffasern, Glasfasern, Aramidfaser und Basaltfaser.

11. Verfahren gemäß mindestens einem der vorgenannten Ansprüche, **dadurch gekennzeichnet, dass** Verstärkungsfasern (2) im Form von Filamenten, Fäden, Garnen, Geweben, Geflechten oder Gewirken bereitgestellt werden.

12. Verfahren gemäß mindestens einem der vorgenannten Ansprüche, **dadurch gekennzeichnet, dass** der Liner (6) ein thermoplastischer Liner oder ein metallischer Liner ist.

**Claims**

1. Method for producing a compressed-gas container which has a storage volume for a pressurised gas and a sleeve enclosing the storage volume, the sleeve comprising a liner (6) in contact with the storage volume and, at least in regions, at least one second layer deposited on the liner (6), the method comprising the following method steps:

   a) providing

      i) a liner (6),
      ii) a curable epoxy resin matrix, and
      iii) reinforcing fibres (2),

   b) applying the curable epoxy resin matrix to the reinforcing fibres (2), the curable epoxy resin matrix having a temperature in the range of from 15 to 50°C,
   c) winding, laying or depositing the reinforcing fibres (2) on the liner (6) to form the second layer,
   d) curing the second layer at a temperature in the range of from 70 to 140°C;

   **characterised in that** the curable epoxy resin matrix has a viscosity in the range of from 200 to 1000 mPa⋅s at a temperature in the range of from 40 to 50°C over a period of at least 48 hours.

2. Method according to claim 1, **characterised in that** the curable epoxy resin matrix in method step b) has a temperature in the range of from 20 to 50°C, preferably in the range of from 25 to 50°C, preferably in the range of from 30 to 50°C, particularly preferably has a temperature in the range of 40 to 50°C.

3. Method according to at least one of the preceding claims, **characterised in that** the epoxy resin matrix is applied to the reinforcing fibres (2) in such a way that the second layer has a weight ratio of reinforcing fibre to epoxy resin matrix in the range of from 50:50 to 80:20.

4. Method according to at least one of the preceding claims, **characterised in that** at a temperature in the range of from 40 to 50°C the epoxy resin matrix has a viscosity of from 300 to 900 mPa*s, in particular from 400 to 800 mPa*s, in particular from 400 to 700 mPa*s at 40°C.

5. Method according to at least one of the preceding claims, **characterised in that** the second layer is cured at a temperature in the range of from 70 to 120°C.

6. Method according to at least one of the preceding claims, **characterised in that** the epoxy resin matrix comprises:

i) at least one epoxy resin having at least one epoxy group,
ii) at least one reactive diluent from the group of glycidyl ethers,
iii) at least one curing agent, in particular a liquid curing agent, in particular from the group of cyanamide-containing curing agents.

7. Method according to at least one of the preceding claims, **characterised in that** the epoxy resin matrix has an average EEW value in the range of from 100 to 250 g/eq before being cured.

8. Method according to claim 6, **characterised in that** the epoxy resin is selected from the group of bi-functional epoxy resins and/or **in that** the epoxy resin has an average EEW value of from 150 to 200 g/eq.

9. Method according to claim 7, **characterised in that** the reactive diluent is selected from the group of bi-functional glycidyl ethers and/or **in that** the glycidyl ether has an average EEW value of from 100 to 200 g/eq.

10. Method according to at least one of the preceding claims, **characterised in that** the reinforcing fibres (2) are selected from the group of carbon fibres, glass fibres, aramid fibres and basalt fibres.

11. Method according to at least one of the preceding claims, **characterised in that** the reinforcing fibres (2) are provided in the form of filaments, threads, yarns, woven fabrics, braided fabrics or knitted fabrics.

12. Method according to at least one of the preceding claims, **characterised in that** the liner (6) is a thermoplastics liner or a metal liner.

**Revendications**

1. Procédé de fabrication d'un conteneur de gaz sous pression, qui présente un volume de stockage pour un gaz sous pression et une enveloppe entourant le volume de stockage, l'enveloppe comprenant un liner (6) en contact avec le volume de stockage et, au moins par zones, au moins une deuxième couche appliquée sur le liner (6), le procédé comprenant les étapes de procédé suivantes :

a) mise à disposition

i) d'un liner (6),
ii) d'une matrice de résine époxy durcissable, et
iii) des fibres de renforcement (2),

b) exposition des fibres de renforcement (2) à la matrice de résine époxy durcissable, la matrice de résine époxy durcissable ayant une température dans la gamme comprise entre 15 et 50 °C,
c) enroulement, pose ou application des fibres de renforcement (2) sur le liner (6) pour former la deuxième couche,
d) durcissement de la deuxième couche à une température dans la gamme comprise entre 70 et 140 °C ;

**caractérisé en ce qu'**à une température dans la gamme comprise entre 40 et 50 °C pendant une période d'au moins 48 heures la matrice de résine époxy durcissable présente une viscosité dans la gamme de 200 à 1000 mPa·s.

2. Procédé selon la revendication 1, **caractérisé en ce que** la matrice de résine époxy durcissable dans l'étape de procédé b) présente une température dans la gamme de 20 à 50 °C, de préférence dans la gamme de 25 à 50 °C, de préférence dans la gamme de 30 à 50 °C, de manière particulièrement préférée une température dans la gamme comprise entre 40 et 50 °C.

3. Procédé selon au moins l'une des revendications précédentes, **caractérisé en ce que** l'exposition des fibres de renforcement (2) à la matrice de résine époxy est telle que la deuxième couche présente un rapport pondéral fibre de renfort/matrice de résine époxy dans la gamme comprise entre 50/50 et 80/20.

**4.** Procédé selon au moins l'une des revendications précédentes, **caractérisé en ce que** la matrice de résine époxy présente une viscosité de 300 à 900 mPa*s, en particulier de 400 à 800 mPa*s, en particulier de 400 à 700 mPa*s, à 40°C, à une température dans la gamme comprise entre 40 et 50°C.

**5.** Procédé selon au moins l'une des revendications précédentes, **caractérisé en ce que** le durcissement de la deuxième couche est effectué à une température dans la gamme comprise entre 70 et 120 °C.

**6.** Procédé selon au moins l'une des revendications précédentes, **caractérisé en ce que** la matrice de résine époxy comprend :

> i) au moins une résine époxy ayant au moins un groupe époxy,
> ii) au moins un diluant réactif choisi dans le groupe des éthers glycidyliques,
> iii) au moins un durcisseur, en particulier un durcisseur liquide, en particulier du groupe des durcisseurs contenant du cyanamide.

**7.** Procédé selon au moins l'une des revendications précédentes, **caractérisé en ce que** la matrice de résine époxy présente, avant durcissement, une valeur moyenne d'EEW comprise entre 100 et 250 g/eq.

**8.** Procédé selon la revendication 6, **caractérisé en ce que** la résine époxy est choisie dans le groupe des résines époxy bifonctionnelles et/ou **en ce que** la résine époxy présente une valeur EEW moyenne de 150 à 200 g/eq.

**9.** Procédé selon la revendication 7, **caractérisé en ce que** le diluant réactif est choisi dans le groupe des éthers glycidyliques bifonctionnels et/ou **en ce que** l'éther glycidylique présente une valeur EEW moyenne de 100 à 200 g/eq.

**10.** Procédé selon au moins l'une des revendications précédentes, **caractérisé en ce que** les fibres de renforcement (2) sont choisies dans le groupe des fibres de carbone, des fibres de verre, des fibres d'aramide et des fibres de basalte.

**11.** Procédé selon au moins l'une des revendications précédentes, **caractérisé en ce que** les fibres de renforcement (2) sont fournies sous la forme de filaments, de fils, de filés, de tissus, de tresses ou de tricots.

**12.** Procédé selon au moins l'une des revendications précédentes, **caractérisé en ce que** le liner (6) est un liner thermoplastique ou un liner métallique.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10156377 A1
- DE 102015016699 A1
- EP 2857428 A1
- WO 2013083172 A1
- WO 2013083152 A1
- WO 201606639 A1
- WO 2018096905 A1

**In der Beschreibung aufgeführte Nicht-Patentliteratur**

- *CHEMICAL ABSTRACTS,* 420-04-2